# EUROPEAN PATENT APPLICATION

(11) **EP 4 782 709 A1**
(43) Date of publication of application: **29.07.2026**
(21) Application number: 25153830.2
(22) Date of filing: 24.01.2025
(51) Int. Cl.: F16C 17/06

(54) **BEARING UNIT FOR AN AZIMUTHING PROPULSION UNIT, AZIMUTHING PROPULSION UNIT HAVING A BEARING UNIT AND METHOD FOR SUPPORTING PARTS OF AN AZIMUTHING PROPULSION UNIT**

(71) Applicant: ABB Oy, 00380 Helsinki (FI)
(72) Inventor: KEKKI, Tuomas, 00980 Helsinki (FI); PELLINEN, Petri, 00980 Helsinki (FI); CLARKSON, Matthew, 00980 Helsinki (FI)
(74) Representative: Zimmermann & Partner Patentanwälte mbB

(57) **Abstract**

A bearing unit for an azimuthing propulsion unit, an azimuthing propulsion unit including a bearing unit, and a method for supporting shafts in an azimuthing propulsion unit is described. The azimuthing propulsion unit includes a rotatable inner shaft and a rotatable outer shaft. The bearing unit includes a bearing arrangement including axial bearings for the inner shaft and the outer shaft; and a bearing housing for housing the bearing arrangement and the parts of the inner shaft and the outer shaft to be supported by the bearing arrangement; wherein the bearing arrangement is configured for allowing a transfer of axial forces between the outer shaft and the inner shaft.

## Description

### TECHNICAL FIELD

Embodiments of the present disclosure relate to an azimuthing propulsion unit, especially to a bearing arrangement of an azimuthing propulsion unit, and a bearing arrangement in an azimuthing propulsion unit. Further embodiments relate to a method of supporting shafts in an azimuthing propulsion unit.

### BACKGROUND

Azimuthing propulsion units provide an efficient way to propel marine vessels. Further, azimuthing propulsion units allow for an improved maneuverability of marine vessels. In azimuthing propulsion units, at least one marine propeller attached to a rotatable pod provides thrust. A direction of the thrust may be controlled via a rotation of the rotatable pod. In typical azimuthing propulsion units, at least one electric motor driving the at least one marine propeller is integrated in the pod.

In known azimuthing propulsion systems, the ship has to go to the dry dock for repair and maintenance of the elements of an azimuthing propulsion system. This comes with high costs and loss of operation time of the complete ship. For instance, the shaft(s) of an azimuthing propulsion system is/are supported by bearings, which are prone to wear and are to be replaced or repaired from time to time. Thus, the bearings within the pod of the azimuthing propulsion unit are one cause for the ship to be stopped and undergo maintenance actions.

Azimuthing propulsion units that provide a high efficiency, durability and maintainability, in particular in view of the restricted amount of space available in the pod, are desired. In particular, a good and uncomplicated maintainability of the pod and the elements in the pod, such as the bearings, leads to reduced costs of operation of an azimuthing propulsion unit. It is therefore desirable to provide a bearing unit for the azimuthing propulsion unit considering the small space within the pod, and enabling easy maintenance, repair and replacement of the bearings in the azimuthing propulsion unit.

### DISCLOSURE OF THE INVENTION

In the view of the foregoing, the present disclosure is directed to a bearing unit for an azimuthing propulsion unit, an azimuthing propulsion unit comprising a bearing unit and a method of supporting an inner shaft and an outer shaft in an azimuthing propulsion unit for an azimuthing propulsion unit.

According to an aspect of the present disclosure, a bearing unit for an azimuthing propulsion unit is provided. The azimuthing propulsion unit includes a rotatable inner shaft and a rotatable outer shaft, wherein the inner shaft runs at least partially within the outer shaft. The bearing unit includes: a bearing arrangement including at least one axial bearing (especially axial bearings) for the inner shaft and the outer shaft, wherein the bearing arrangement is configured for supporting at least a part of the inner shaft and the outer shaft; and a bearing housing for housing the bearing arrangement and the part of the inner shaft and the outer shaft to be supported by the bearing arrangement. The bearing arrangement is configured for allowing a transfer of axial forces between the outer shaft and the inner shaft. According to embodiments described herein, an azimuthing propulsion unit including a bearing unit as described herein is provided.

According to some embodiments, an azimuthing propulsion unit is configured to propel a marine vessel. In particular, the marine vessel may comprise at least one azimuthing propulsion unit according to embodiments described herein. The marine vessel as described herein comprises seagoing or inland marine vessels. In particular, the marine vessel comprises ships and boats. In some embodiments, the marine vessel comprises merchant ships, in particular for transporting goods. In particular, the marine vessel may comprise a container vessel, a Ro-Ro or car carrier, a tanker or shuttle tanker, a liquid natural gas (LNG) carrier or a floating storage and regasification unit. In some embodiments, the marine vessel comprises ferries, in particular single- and double-ended ferries, cruise ships, water buses, yachts. In some embodiments, the marine vessel comprises offshore energy vessels, in particular service operation vessels (SOVs), cable laying vessels (CLVs), foundation installation vessels (FIVs), offshore construction (OCVs) and support vessels (OSVs), platform supply vessels (PSVs), and anchor-handling tug supply vessels (AHTS). In some embodiments, the marine vessel comprises research and survey vessels or other special purpose vessels, such as dredgers, heavy lift vessels or towboats. In some embodiments, the marine vessel comprises ice-going marine vessels, in particular icebreakers. In some embodiments, the marine vessel may comprise navy or coast guard vessels.

The marine vessel typically comprises a hull. The pod of the azimuthing propulsion unit is attached to the hull of the marine vessel, in particular at the bottom of the hull. Typically, the hull defines a vessel interior and a vessel exterior. Space confined by the hull and configured to be isolated from sea water may be defined as the vessel interior. Space outside the hull, and in particular the sea, may be defined as the vessel exterior. Typically, the vessel interior is substantially free of sea water and substantially dry.

In some embodiments, the marine vessel may comprise a plurality of azimuthing propulsion units. In particular, the marine vessel may comprise 2, 3, 4, or more azimuthing propulsion units. Typically, each of the plurality of azimuthing propulsion units may be controlled separately. In some embodiments, the marine vessel may comprise a single azimuthing propulsion unit with a single pod. In some embodiments, at least one azimuthing propulsion unit may be combined with one or more further marine propulsion unit on a single marine vessel.

Typically, the azimuthing propulsion unit comprises a pod with a pod hull. The pod is configured to be rotatably attached to the hull of the marine vessel, particularly at the bottom of the hull of the marine vessel. The pod may be rotated about a substantially vertical rotation axis of the azimuthing propulsion unit. In particular, the pod may be rotated by at least 270°, at least 315° or at least 360° about the substantially vertical rotation axis of the azimuthing propulsion unit. In typical embodiments, the rotation of the pod about the substantially vertical rotation axis of the azimuthing propulsion unit is not restricted, in particular not mechanically restricted.

Typically, the pod comprises a hull cap at a first end of the pod and a propeller unit, in particular a pushing or pulling propeller unit, attached to a second end of the pod. The first end of the pod may also be described as non-driving end, NDE, and the second end of the pod may also be described as driving end, DE, of the pod. The propeller unit typically rotates about a rotation axis of the propeller unit. The rotation axis of the propeller unit may be substantially perpendicular to the vertical rotation axis of the azimuthing propulsion unit.

In typical embodiments, the propeller unit comprises an outer shaft propeller and an inner shaft propeller. Typically, the outer shaft propeller is arranged closer to the hull than the inner shaft propeller. In a pushing propeller unit, the outer shaft propeller may also be described as front propeller and the inner shaft propeller may be described as the rear propeller; and vice versa for a pulling propeller unit. In particular, the outer shaft propeller is arranged closer to the vertical rotation axis than the inner shaft propeller. Typically, the outer shaft propeller and the inner shaft propeller are arranged adjacent to each other. The outer shaft propeller and the inner shaft propeller rotate about the rotation axis of the propeller unit.

Typically, the propeller unit comprises a contra rotating propeller unit. In particular, the outer shaft propeller may be configured to rotate in a first direction, particularly about the rotation axis of the propeller unit, and the inner shaft propeller may be configured to rotate in a second direction opposite to the first direction, particularly about the rotation axis of the propeller unit. In other words, the outer shaft propeller may rotate clockwise and the inner shaft propeller may rotate counterclockwise, or vice versa, about the same rotation axis. A contra rotating propeller unit may advantageously allow for a higher hydrodynamic efficiency than other propeller concepts, in particular with respect to single propellers.

In some embodiments, the outer shaft propeller has a first diameter and the inner shaft propeller has a second diameter with the second diameter being different from the first diameter, particularly the first diameter being larger than the second diameter. Typically, the outer shaft propeller comprises a first number of first blades and the inner shaft propeller comprises a second number of second blades. Typically, the second number may be different from the first number. The outer shaft propeller may comprise 3, 4, 5, 6 or 8 first blades. The inner shaft propeller may comprise 3, 4, 5, 6 or 8 second blades. In some embodiments, the outer shaft propeller comprises one more first blade than the inner shaft propeller comprises second blades. Exemplarily, the outer shaft propeller comprises 6 first blades and the inner shaft propeller comprises 5 second blades. In some embodiments, the outer shaft propeller and the inner shaft propeller may comprise the same number of blades, in particular 3, 4, 5, 6 or 8 first and second blades, respectively. The outer shaft propeller and/or the inner shaft propeller may each be manufactured as a monoblock or in components, as a built-up propeller.

Typically, the propeller unit is driven by an electric motor. Typically, the electric motor has a power of at least 100 kW, at least 1 MW, at least 2 MW, at least 5 MW, at least 10 MW or at least 15 MW. The electric motor is typically arranged within the pod. Particularly, the electric motor is mechanically connected to the propeller gearlessly. Typically, a rotation axis of the electric motor is identical to a rotation axis of the propeller unit. In particular, an output shaft of the electric motor may be identical to the drive shaft of the propeller unit or may be gearlessly connected to a drive shaft of the propeller unit. The output shaft of the electric motor typically is coaxial to the drive shaft of the propeller unit. In typical embodiments, for a propeller unit comprising an outer shaft propeller and an inner shaft propeller, in particular for the contra rotating propeller unit, the outer shaft propeller and the inner shaft propeller may be driven by the same electric motor.

The electric motor typically comprises a contra rotating electric motor. In particular, the contra rotating electric motor comprises a dual rotor electric motor with an outer rotor and an inner rotor configured to rotate in opposite directions about a rotation axis of the electric motor. Typically, the rotation axis of the electric motor may be coaxially with the rotation axis of the propeller unit. Typically, the electric motor is a synchronous electric motor. Typically, the outer rotor comprises windings to be supplied by an electric current for the operation of the electric motor. The inner rotor may be a permanent magnet rotor or an externally excited synchronous rotor.

In some embodiments, the drive shaft of the propeller comprises an outer shaft and an inner shaft. Outer shaft and inner shaft are typically coaxially arranged. Typically, the outer rotor drives the outer shaft. The outer shaft is typically mechanically connected to the outer shaft propeller gearlessly. Typically, the inner rotor drives the inner shaft. The inner shaft is typically mechanically connected to the inner shaft propeller gearlessly. Typically, the inner shaft is (at least partially) arranged inside the outer shaft; especially, an inside radius of the outer shaft exceeds an outside radius of the inner shaft. The inner shaft and the outer shaft rotate about the same rotation axis, and in particular about the rotation axis of the electric motor. Typically, the inner shaft is supported in the pod by a drive end (DE) inner bearing and a non-drive end (NDE) bearing unit. Typically, the outer shaft is supported in the pod by a drive end (DE) outer bearing and the NDE bearing unit. Employing a contra rotating electric motor may advantageously allow to drive the contra rotating propeller with a single electric motor gearlessly. Thereby, a more compact and efficient drive train may be provided.

With the bearing unit according to embodiments described herein, the shafts of the azimuthing propulsion unit can be supported in a space-saving arrangement and, at the same time, the maintenance, repair and replacement of parts of the bearing arrangement, or parts of/at the bearing housing is facilitated.

Typically, the bearing arrangement includes a first axial bearing between the inner shaft and the outer shaft for allowing the transfer of axial forces between the inner shaft and the outer shaft. In some embodiments, the bearing arrangement includes the first axial bearing between the inner shaft and the outer shaft, a second axial bearing arranged between a bearing housing wall and the inner shaft, and a third axial bearing arranged between a bearing housing wall and the outer shaft. The arrangement of the axial bearings between the shafts as well as a common placement of the axial bearing(s) for both shafts allows for an efficient, space-saving, and compact arrangement of the bearings used for the shafts of the azimuthing propulsion unit.

In some embodiments, the bearing housing includes at least one hatch or opening for reaching into the inside of the bearing housing. Especially, the at least one hatch is configured for allowing access to the axial bearing(s), maintenance of the axial bearing(s) and replacement of the axial bearing(s) of the bearing arrangement for the inner shaft and the outer shaft. Additionally, or alternatively, the at least one hatch allows for access to the housing for allowing maintenance, repair or replacement of the radial bearing(s) and/or other elements within, at or near the bearing housing (such as seals and the like). This facilitates the maintenance, repair and replacement of elements within the pod of the azimuthing propulsion unit, and saves time and costs.

According to some embodiments, the bearing unit may inlcude an oil seal. In particular, the oil seal may be located between the inner shaft and the outer shaft, especially between a flange of the inner shaft and a flange of the outer shaft. In some embodiments, the oil seal may be located under (inside) the first bearing. Especially, the oil seal may be removable throug the at least one hatch. More specifically, the first bearing may be removed at least partly to open up a maintenance route/space for maintenance, repair or exchange of the oil seal, especially via hatch. In some embodiments, the oil seal may include an oil seal housing. According to some embodiments, the oil seal housing part can be fastened to one of the inner shaft and the outer shaft, or both (or the respective flanges of the shafts). Typically, the oil seal may contain elastic lips seals against liner.

According to some embodiments described herein, at least one of the axial bearings (and/or, optionally, at least one of the radial bearings) of the bearing arrangement is a pad bearing. A pad bearing provides a reliable function with a simple design. In some embodiments, the pad bearing can easily be removed from the bearing housing due to its simple design and uncomplicated montage possibilities.

According to embodiments described herein, an azimuthing propulsion unit is provided including a bearing unit according to embodiments described herein. Especially, the azimuthing propulsion unit is configured for allowing access of a person to a hatch of the bearing housing of the bearing unit. The azimuthing propulsion unit with the bearing unit according to embodiments described herein, enables an easy access to the complete bearings of the shafts of the NDE side of the azimuthing propulsion unit.

According to another aspect of the present disclosure, a method of supporting an inner shaft and an outer shaft in an azimuthing propulsion unit according to any of the embodiments described herein is provided, wherein the azimuthing propulsion unit includes the inner shaft and the outer shaft and wherein the inner shaft runs at least partially within the outer shaft. The method includes providing a bearing arrangement and a bearing housing for housing the bearing arrangement, the bearing arrangement including at least one axial bearing for the inner shaft and the outer shaft; and arranging the axial bearing of the bearing arrangement for allowing a transfer of axial forces between the outer shaft and the inner shaft

According to some embodiments described herein, arranging the axial bearings for a transfer of axial forces between the outer shaft and the inner shaft includes arranging a first axial bearing between the inner shaft and the outer shaft. In some embodiments, which may be combined with other embodiments described herein, arranging the first axial bearing between the inner shaft and the outer shaft includes utilizing a bearing pad mounted between the inner shaft and the outer shaft. This may provide a compact, reliable, and cost-efficient solution for supporting both shafts of the azimuthing propulsion unit. Furthermore, the transfer of axial forces between the inner shaft and the outer shaft is enabled by the one axial bearing between the two shafts.

Typically, the method according to some embodiments described herein may include accessing the bearing arrangement (or other elements, such as oil seals, and the like) within the bearing housing through a hatch or opening. In particular, the method according to embodiments described herein, may include performing repair, maintenance, and/or replacement of the bearing arrangement through the at least one hatch or opening. Accessing the inside of the bearing housing through a hatch, which is - in turn - accessible from the inside of the pod of the azimuthing propulsion unit, facilitates maintenance and repair, and safes time and costs for the maintenance and repair. In some embodiments, the bearing unit may include an oil seal, which may especially be located between the inner shaft and the outer shaft, or their flanges. Typically, the method may include removing the oil seal from the bearing unit through the at least one hatch. According to some embodiments, which may be combined with other embodiments described herien, the method may inlcude removing the first bearing (being e.g. designed as a pad bearing) at least partly to open up a maintenance route/space for maintenance, repair or exchange of the oil seal, especially via hatch. In some embodiments, the oil seal may include an oil seal housing. According to some embodiments, the oil seal housing part can be fastened on the inner and/or outer shaft, or on or into one (or both) of the flanges of the inner shaft and the outer shaft.

Further advantages, features, aspects and details that can be combined with embodiments described herein are evident from the dependent claims, the description and the drawings.

### BRIEF DESCRIPTION OF THE DRAWINGS

The accompanying drawings relate to embodiments of the disclosure and are described in the following:
- FIG 1a: schematically illustrates an azimuthing propulsion unit according to the embodiments described herein;
- FIG 1b: schematically illustrates an azimuthing propulsion unit according to the embodiments described herein;
- FIG 1c: schematically illustrates an azimuthing propulsion unit according to the embodiments described herein;
- FIG 2: schematically shows an NDE side of the azimuthing propulsion unit with a bearing unit according to some embodiments described herein;
- FIG. 3: schematically shows a bearing unit for an azimuthing propulsion unit according to some embodiments described herein;
- FIG. 4: schematically shows a bearing unit for an azimuthing propulsion unit according to some embodiments described herein and the transfer of forces therein;
- FIG. 5: schematically shows a perspective view of a bearing unit at the NDE side of an azimuthing propulsion unit according to some embodiments described herein;
- Fig. 6: schematically shows an enlarged view of Fig. 2; and,
- Fig. 7: schematically shows a flow chart of a method for supporting shafts in an azimuthing propulsion unit according to some embodiments described herein.

### DETAILED DESCRIPTION OF EMBODIMENTS

Reference will now be made in detail to the various embodiments of the disclosure, one or more examples of which are illustrated in the figures. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield a further embodiment. It is intended that the description includes such modifications and variations. In the figures, elements may be depicted with exaggerated dimensions to improve the comprehensibility of the detailed description of embodiments. In particular, relations of lengths and widths of components shown may be distorted. Further, some elements may be depicted with enlarged dimensions while other elements in the same figure are depicted, relatively, with reduced dimensions.

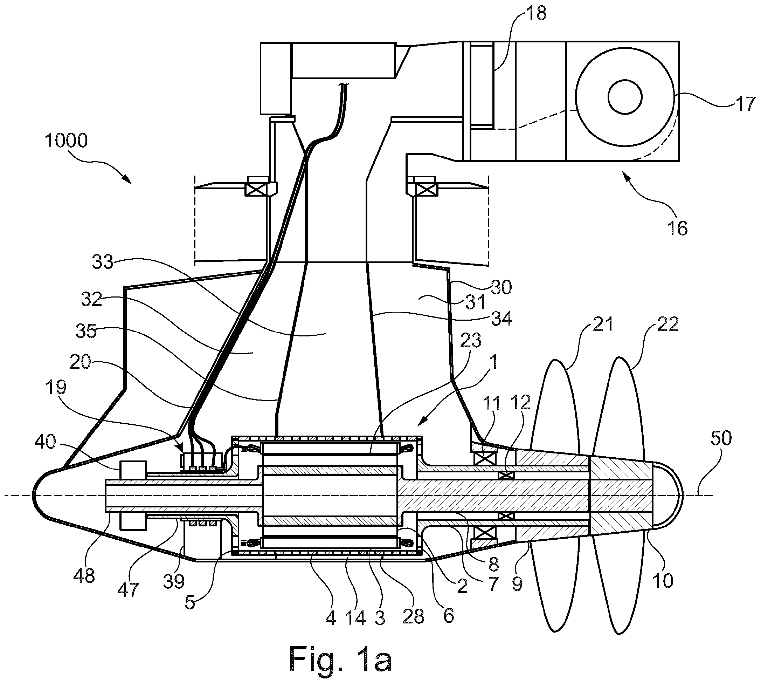

FIG 1a schematically illustrates an azimuthing propulsion unit 1000 according to typical embodiments described herein. The azimuthing propulsion unit 1000 of Fig. 1a comprises a dual rotor electric motor 1. The dual rotor electric motor 1 may also be described as contra rotating electric motor. The dual rotor electric motor 1 is typically arranged substantially horizontally centrally within the azimuthing propulsion unit 1000.Particularly, the dual rotor electric motor 1 is arranged within a pod of the azimuthing propulsion unit 1000.

The dual rotor electric motor 1 comprises an inner rotor 2 and an outer rotor 3. The inner rotor 2 is arranged within the outer rotor 3. Inner rotor 2 and outer rotor 3 are arranged coaxially with respect to each other. The inner rotor 2 and the outer rotor 3 are configured to rotate about a rotation axis 50. The rotation axis 50 is a longitudinal axis of the azimuthing propulsion unit 1000. The inner rotor 2 drives an inner shaft propeller 10 and the outer rotor 3 drives an outer shaft propeller 9. The outer shaft propeller 9 and the inner shaft propeller 10 are arranged coaxially and rotate about the rotation axis 50. The outer shaft propeller 9 and the inner shaft propeller 10 form a contra rotating propeller unit. In the embodiment of Fig. 1a, the outer shaft propeller 9 and the inner shaft propeller 10 substantially have the same diameter. In embodiments not shown in Fig. 1a the outer shaft propeller 9 may have a diameter different from the diameter of the inner shaft propeller 10. Exemplarily, the outer shaft propeller 9 may have a diameter of at least 6 m, exemplarily of 6.1 m, and the inner shaft propeller 10 may have a diameter of at most 6 m, exemplarily of 5.575 m. According to some embodiments, the diameter of the inner shaft may typically be between about 500 mm and about 1500 mm, more typically between about 700 mm and about 1200 mm, and even more typically between about 800 mm and about 1000 mm. In one embodiment, the diameter of the inner shaft may be about 800 mm. According to some embodiments, the diameter of the outer shaft may typically be between about 800 mm and about 2000 mm, more typically between about 900 mm and about 1800 mm, and even more typically between about 1200 mm and about 1600 mm. In one embodiment, the diameter of the inner shaft may be about 1500 mm.

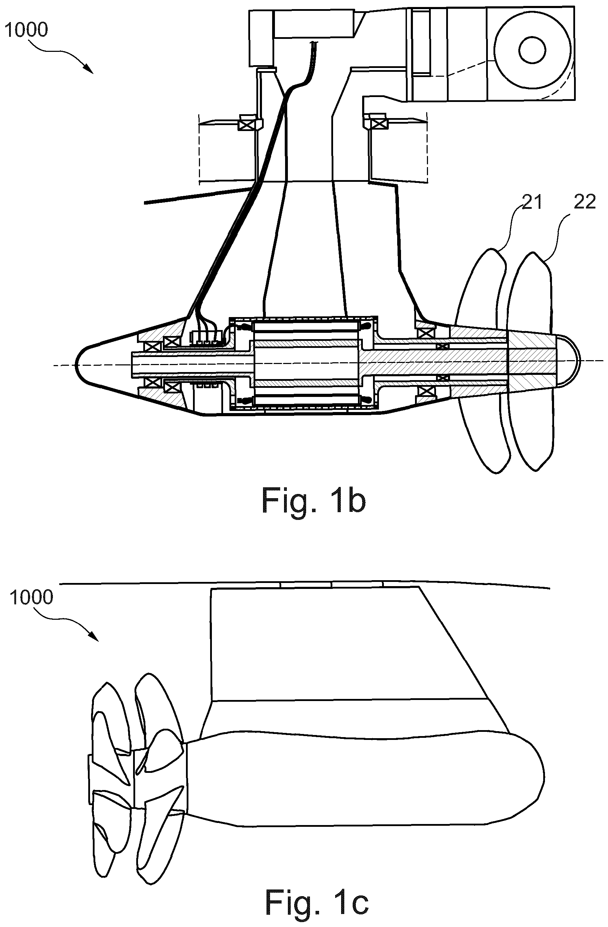

The outer rotor 3 of the dual rotor electric motor 1 typically comprises a perforated tube 4, as shown in the typical embodiment of Fig. 1. The perforated tube 4 mechanically supports the outer rotor winding and comprises a plurality of openings. The plurality of openings of the perforated tube 4 are configured to pass air from an exterior of the dual rotor electric motor 1 into an interior of the dual rotor electric motor 1, and vice versa. Warm air, particularly heated by the dual rotor electric motor 1, may pass from an air gap 23 between the inner rotor 2 and the outer rotor 3 through the perforated tube to an annular air channel 14.

The perforated tube 4 transmits a torque of the outer rotor 3 to outer rotor end flanges 5, 6. A non-drive end, NDE, outer rotor end flange 5 connects the perforated tube 4 to an NDE outer shaft 47. A drive end, DE, outer rotor end flange 6 connects the perforated tube 4 to a DE outer shaft 7. The DE outer shaft 7 transmits the torque of the outer rotor 3 to the outer shaft propeller 9. The outer shaft propeller 9 comprises a plurality of first blades 21, of which two are visible in Fig. 1. The inner rotor 2 is connected to an NDE inner shaft 48 and to a DE inner shaft 8. The DE inner 8 shaft transmits the torque of the inner rotor 2 to the inner shaft propeller 10. The inner shaft propeller 10 comprises a plurality of second blades 22, of which two are visible in Fig. 1a. In the embodiment of Fig. 1a, the outer shaft propeller 9 and the inner shaft propeller 10 are arranged in a pulling configuration. In particular, the first blades 21 and the second blades 22 are configured to operate in a pulling mode.

The NDE inner shaft 48 and the NDE outer shaft 47 are supported by a bearing unit 40. In some embodiments, the bearings for the NDE inner shaft and for the NDE outer shaft can be configured so that the axial (and, eventually, radial bearings) for both shafts may be fitted into the same bearing housing. Typically, the bearing unit 40 (and/or the bearing arrangement of the bearing unit) typically comprises an oil seal, respectively.

The DE outer shaft 7 is supported in the pod 30 by a DE outer bearing 11. The DE inner shaft 7 is supported in the DE outer shaft 8 by a DE inner bearing 12. The DE outer bearing 11 and the DE inner bearing 12 typically comprise an oil and water seal, respectively.

The dual rotor electric motor 1 is provided with electric energy via a slip ring unit 19. The slip ring unit 19 is typically arranged on the non-drive end side of the dual rotor electric motor 1 and particularly to contact the NDE outer shaft 47 as shown in Fig. 1. The NDE outer shaft 47 and the NDE outer rotor end flange 5 are configured to electrically connect the slip ring unit 19 to the dual rotor electric motor 1. The slip ring unit 19 comprises at least one sliding contact to transmit electricity from power supply cables 20 to the dual rotor electric motor 1 and particularly to the outer rotor 3 of the dual rotor electric motor 1. From the outer rotor 3, electricity is provided to windings of the dual rotor electric motor 1. The power supply cables 20 provide electrical power from a marine vessel, and particular from a power supply of the marine vessel to the dual rotor electric motor 1 via the slip ring unit 19. The slip ring unit 19 comprises a slip ring unit housing 39. The slip ring unit housing 39 separates the slip ring unit 19 from a further interior of the pod 30 and particularly is configured to prevent dust generated inside the slip ring unit 19, particularly generated by the at least one sliding contact of the slip ring unit 19, to escape to the interior of the pod 30.

Inside the pod 30 of the azimuthing propulsion unit 1000, air is circulated. The azimuthing propulsion unit 1000 comprises a cooling air unit 16. In the embodiment of Fig. 1, the cooling air unit 16 is arranged within a hull of a marine vessel. In the typical embodiment shown in Fig. 1a, the cooling air unit 16 comprises an air fan 17 to circulate air. The cooling air unit 16 typically comprises a heat exchanger 18. By the heat exchanger 18, warm air entering the heat exchanger 18 from the pod 30 is cooled with heat being at least partially transferred to a cooling agent of the heat exchanger 18. The cooling air unit 16 provides cool air to the dual rotor electric motor 1 via a DE ingoing air channel 31 and an NDE ingoing air channel 32 in the pod 30. The DE ingoing air channel 31 is physically separated from an outgoing air channel 33 by an DE air channel separating wall 34 in Fig. 1a. The NDE ingoing air channel 32 is physically separated from the outgoing air channel 33 by an NDE air channel separating wall 35 in Fig. 1a. Typically, the outgoing air channel 33 substantially extends in the center of the pod 30 and particularly along a vertical central axis of the pod 30. Air passing through the DE ingoing air channel 31 and/or the NDE ingoing air channel 32 passes through openings of the perforated tube 4 and/or the outer rotor end flanges 5, 6 into an interior of the dual rotor electric motor 1. Within the dual rotor electric motor 1, the air may be heated by the dual rotor electric motor 1, in particular when in operation. The air may exit the dual rotor electric motor 1 via openings of the perforated tube 4 towards the annular air channel 14. The annular air channel 14 is connected to the outgoing air channel 33.

In Fig. 1b, the azimuthing propulsion unit 1000 is configured to operate in a pushing mode. In particular, the first blades 21 and the second blades 22 are configured to operate in a pushing mode. In Fig. 1c, a side view of the azimuthing propulsion unit 1000 of the embodiment of Fig. 1b is schematically shown.

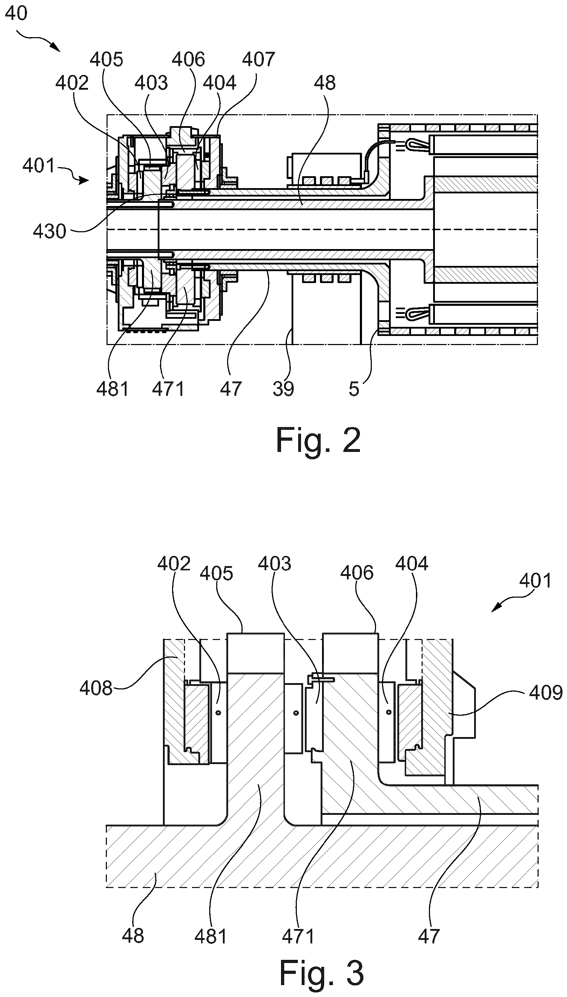

Fig. 2 shows a partial view of an azimuthing propulsion unit and, especially, the NDE side according to some embodiments described herein. In Fig. 2, the bearing unit 40 is shown including a bearing arrangement 401 and a bearing housing 407. Typically, the bearing housing may at least partly be filled with an lubricant, such as oil. In some embodiments, the bearing(s) of the bearing arrangement 401 are lubricated, such as oil lubricated. The bearing arrangement 401 includes bearings 402 to 406 for supporting both the inner shaft 48 and the outer shaft 47. Typically, the outer shaft 47 may include a flange 471, especially at the end of the outer shaft 47. In some embodiments, the NDE side of the outer shaft may be the part of the outer shaft to be supported by the bearing arrangement. In some embodiments, the outer shaft 47 may have a substantially L-like shape for providing the flange 471 at the end of the outer shaft 47. According to some embodiments, the inner shaft 48 may include a flange 481 extending from the inner shaft 48. In some embodiments, the NDE side of the inner shaft may be the part of the inner shaft to be supported by the bearing arrangement. In some embodiments, the flange 471 of the outer shaft 47 and/or the flange 481 of the inner shaft 48 may be integrally formed with the rest of the respective shaft. Alternatively, or additionally, the flange 471 and/or the flange 481 may be connected to the rest of the respective outer shaft, e.g. by screws, bolts, mortise joints, some kind of tongue and groove arrangement, or the like.

According to some embodiments, the flange 471 of the outer shaft 47 and/or the flange 481 of the inner shaft 48 may extend from the surface of the part of the respective shaft, which runs substantially parallel to the rotation axis, from about 100 mm to about 400 mm, more typically from about 150 mm to about 350 mm, and even more typically from about 200 mm to about 300mm in radial direction. Typically, the extension of the flange 471 of the outer shaft 47 and/or the flange 481 of the inner shaft 48 in axial direction may be between about 50 mm to about 400 mm, more typically between about 100 mm and about 350 mm, and even more typically between about 150 mm and about 300 mm. According to some embodiments, the flanges 471 and 481 may be arranged and configured with respect to each other for enabling the montage of two shafts and/or for enabling the montage of the common axial bearing at one of the flanges, e.g. by one flange extending the other flange slightly in radial direction.

Typically, the bearing unit 40 is adapted and configured for supporting the flange 471 of the outer shaft 47 and the flange 481 of the inner shaft 48.

The bearing unit 40 includes a bearing arrangement 401 including bearings for supporting the inner shaft 48 and the outer shaft 47. In some embodiments, the bearings of the bearing arrangement 401 are configured and placed for supporting the inner shaft 48 and the outer shaft 47 by supporting the flange 481 of the inner shaft 48 and the flange 471 of the outer flange 47. According to embodiments described herein, the bearing arrangement 401 may include one or more axial bearings 402, 403, 404 for the inner shaft 48 and the outer shaft 47. According to some embodiments, which may be combined with other embodiments described herein, the bearing arrangement 401 may include radial bearings 405, 406 for the inner shaft 48 and the outer shaft 47 of the azimuthing propulsion unit.

Fig. 3 shows a schematic view of the bearing arrangement 401according to some embodiments described herein. The bearing arrangement 401 includes a first axial bearing 403 between the inner shaft 48 and the outer shaft 47 (or between the flange 481 of the inner shaft 48 and the flange 471 of the outer shaft 47). In the embodiment exemplarily shown in Fig. 3, the bearing arrangement 401 further includes a second axial bearing 402 arranged between a first bearing housing wall 408 and the inner shaft 48 (or the flange 481 of the inner shaft), and a third axial bearing 404 arranged between a second bearing housing wall 409 and the outer shaft 47 (or the flange 471 of the outer shaft). Typically, the first bearing housing wall 408 and the second bearing housing wall 409 may extend substantially perpendicular to the axis of rotation 50 of the inner shaft 48 and the outer shaft 47. The bearing arrangement 401 shown in Fig. 3 may further include a radial bearing 405 for the inner shaft 48 and a radial bearing 406 for the outer shaft 47. Typically, the location of the radial bearing may be different in other embodiments.

According to embodiments described herein, the bearing arrangement 401 is configured for allowing a transfer of axial forces between the outer shaft 47 and the inner shaft 48 (or, particularly, the flange 471 of the outer shaft 47 and the flange 481 of the inner shaft 48). For instance, a first axial bearing 403 is provided between the inner shaft and the outer shaft for enabling a transfer of the axial forces between the shafts.

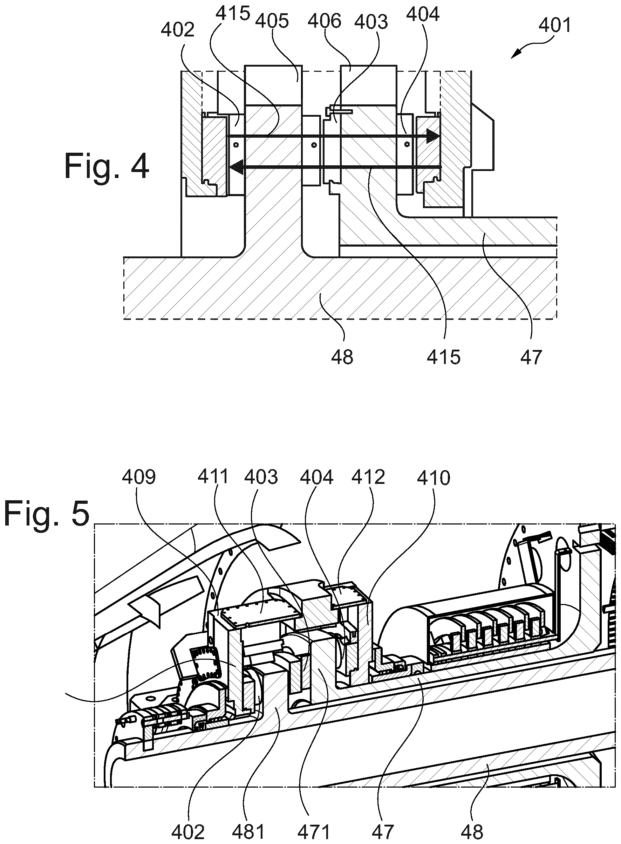

Fig. 4 shows the situation of a transfer of axial forces between the flange 481 of the inner shaft and the flange 471 of the outer shaft by arrows 415. The arrows 415 of Fig. 4 show a transfer of axial forces between the shafts in both directions. According to some embodiments, a transfer of axial forces between the two shafts may be beneficial for the stability of the drive chain of the azimuthing propulsion unit. The axial load of the two shafts may be described as being bundled or merged when using a bearing unit as described in embodiments described herein, and the bearing arrangement of the bearing unit allows for a combined axial load sharing. Typically, a combined axial load sharing enables the distribution of the load, especially the weakening of load peaks. The distributed load may relieve the single shafts and may prevent damage on one of the shafts. The bearing arrangement 401 shown in Fig. 4 may further include a radial bearing 405 for the inner shaft 48 and a radial bearing 406 for the outer shaft 47.

Typically, the inner shaft and the outer shaft and the bearing arrangement as described in embodiments herein, are arranged within the bearing housing for a combined axial load sharing. According to some embodiments, the first axial bearing 403 may be configured to carry thrust loads from one shaft. The second and third bearing 402 (or 404) may be configured to carry thrust loads from both shafts.

Typically, for enabling a transfer of axial forces between two shafts in an azimuthing propulsion unit, the location and the distance of the inner shaft to the outer shaft may be considered (and, especially, the location and the distance between the flange 471 of the outer shaft and the flange 481 of the inner shaft). Typically, the inner shaft and the outer shaft are positioned dependent on each other in axial direction, in particular by the first axial bearing. Typically, the inner shaft and the outer shaft share one axial bearing, namely the first axial bearing 403. In some embodiments, the inner shaft and the outer shaft share one axial bearing for enabling the transfer of axial forces (and, especially, for realizing the combined axial load sharing). Typically, the bearing arrangement (in particular the first axial bearing 403) provides support for the combined axial load sharing of the inner shaft and the outer shaft.

According to some embodiments described herein, the arrangement of the inner shaft and the outer shaft with respect to each other and the arrangement of the first axial bearing allows for a space saving arrangement of the shafts as well as a space saving arrangement of the bearing unit. The compact design of the bearing unit and the positioning of the shafts to each other for a space saving arrangement further allows the bearing unit to be easily (and commonly) maintained.

According to some embodiments, the bearings as described herein, may be pad bearings, but may also be rolling bearing, or plain bearings, or any combination of the different bearing types for the different bearing locations. In one embodiment, the radial bearing(s) may be slide bearings/ pad bearings. In some examples, the bearings of the bearing arrangement may be chosen as useful or appropriate for the bearing unit. For instance, in some embodiments, the radial bearings of the bearing arrangement according to some embodiments described herein may be rolling bearings, while the axial bearings (or at least one of them) may be (a) pad bearing(s). In some embodiments, which may be combined with other embodiments described herein, some components of the axial bearing may be partitioned (e.g. in replaceable sectors) for facilitating a removal of the axial bearing out of the bearing housing. Typically, the top (at one or both sides) of the pad bearing may be a slide bearing. According to some embodiments, a pad bearing may be composed of multiple pads (such as two or more pads), or pad layers. According to some embodiments, a pad bearing as described herein may be designed as useful or suitable for the application in the bearing arrangement according to embodiments described herein. For instance, a pad bearing may include sector pieces, may be substantially round shaped, may include a slide bearing housing, a bearing ring, a slide guide, sliding segments, segment carrier and the like, and/or may be equipped with spring elements.

According to some embodiments, the axial bearing(s), such as bearing pads, and especially the first axial bearing 403, may be mounted to the inner shaft or the outer shaft by a fixation means. In some embodiments, the axial bearing(s), especially first bearing 403, is mounted and configured in a non-rotating way. For instance, the axial bearing(s), especially the first bearing 403, may be fastened to the bearing housing. Typically, the axial bearing(s) may be fastened to a shaft by a bolt connection, a screw connection, a form-fit connection (such as a fishtail connection), and the like.

According to some embodiments, which may be combined with other embodiments described herein, the bearing unit as described herein may include a misalignment compensation mechanism in the axial bearing(s), especially the first axial bearing 403. For instance, elastic (spring) elements (e.g. a disk spring) may be used as a misalignment compensation mechanism.

Typically, the design of the axial bearing, the fixation means for the at least one axial bearing, the arrangement of the bearings within the housing, the housing geometry, the arrangement of the flanges of the inner shaft and the outer shaft may be arranged so as to enable a maintenance person to lift up the axial bearing in the case of maintenance, repair, or replacement. For instance, the bearing arrangement and the bearing housing may be designed so that substantially no barrier (or at least only a removable barrier) is present when lifting an axial bearing out of the housing.

According to embodiments described herein, the bearing unit as referred to herein is a bearing unit for an azimuthing propulsion unit. According to some embodiments, the bearing unit may be adapted or configured for an azimuthing propulsion unit by choosing for instance the size, the material, the strength, the type, the location, the arrangement, the shape and further properties for the use in an azimuthing propulsion unit. For instance, the size of the bearing unit may be adapted to the above listed sizes of the shafts. In another example, the material and/or the strength may be chosen according to the expected load appearing in an azimuthing propulsion unit having e.g. the above named examples of propeller power, and so on. In some embodiments, the housing of the bearing unit may be adapted to be mounted in a pod of an azimuthing propulsion unit. The housing may for instance be adapted by configuring the size, the shape, the mounting features, the seals, and the like for the use in a pod of an azimuthing propulsion unit. In some embodiments, which may be combined with other embodiments described herein, the bearing unit may be adapted for an azimuthing propulsion unit by choosing the properties of the bearings of the bearing arrangement for the shafts of an azimuthing propulsion unit (e.g. regarding size, strength and the like). Typically, the bearing unit may be adapted for the montage in a pod of an azimuthing propulsion unit (e.g. by respective fixation means, montage features, fulfilled shape requirements, and the like) and may especially be configured for a better maintenance and repair possibilities, e.g. by hatches as described in detail below.

In one embodiment, the bearing unit provides for a defined axial distance between the inner shaft 48 (or its flange 481) and the outer shaft 47 (or its flange 471), especially via the geometrical conditions of the bearing arrangement and the bearing housing. For instance, the bearing unit provides an axial distance between the inner shaft and the outer shaft within the bearing housing of between typically about 50 mm and about 250 mm, more typically between about 80 mm and about 200 mm, and even more typically between about 100 mm and about 170mm.

Typically, the bearings of the bearing arrangement and the bearing housing provide at least partly a substantially ring-like shape surrounding parts (such as flanges) of the inner shaft and the outer shaft.

A property being denoted with "substantially" herein may be understood as the property including small or minor deviations. For instance, the term "substantially ringshaped" may be understood that the ring may have small interruptions from the strict closed ring shape. In another example, a "substantially L-like shape" may look like an "L" but may include deviations from the rectangular angles in an "L" of about typically 15%, more typically of about 10%, and even more typically of about 5%. The same may be valid for expressions like "substantially parallel", "substantially perpendicular", and the like.

Fig. 5 shows a partial, perspective view of the bearing unit 40 arranged at the NDE side of an azimuthing propulsion unit. Fig. 5 shoes a bearing unit 40 according to embodiments descried herein including a bearing housing 407 having bearing housing walls 408, 409, and 410 (as can exemplarily be seen in Fig. 5). Typically, the bearing housing 407 is adapted for housing the bearing arrangement 401 including one or more bearings for the inner shaft 48 and the outer shaft 47, and for housing the parts (especially the flanges 471 and 481) of the inner shaft 48 and the outer shaft 47 to be supported by the bearing arrangement 401. In some embodiments, the bearing housing 407 may be adapted for holding one or more of the bearings of the bearing arrangements, and withstanding the forces exerted by the bearings of the bearing arrangement 401. According to some embodiments, the bearing housing being adapted for housing parts of the inner shaft 48 and the outer shaft 47 and/or adapted for holding bearings of the bearing arrangement may include adapting the size of the housing, the shape of the housing, the properties of the material of the housing, the stability and the statics of the housing, and the like. Especially, the strength and statics of the bearing housing may be adapted to be able to hold a bearing, or counter the forces provided by the bearing, e.g. in a case, where a bearing is (partly) fixed to a bearing housing wall.

According to some embodiments, which may be combined with other embodiments described herein, the bearing housing may have a length in axial direction from about 500 mm to about 2000 mm. According to some embodiments, the bearing housing may have a width in radial direction from about 300 mm to about 1500 mm cm.

The inner shaft 48, the flange 481 of the inner shaft, the outer shaft 47, the flange 471 of the outer shaft 47, the bearing housing 407 having bearing housing walls 408, 409, and 410 can exemplarily be seen in Fig. 5. Typically, the bearing housing walls 408 and 410 extend substantially perpendicular to the rotation axis of the inner shaft and the outer shaft, and bearing housing wall 411 extends (at least partly) substantially parallel to the rotation axis of the inner shaft and the outer shaft. In some embodiments, bearing housing wall 409 extending substantially parallel to the rotation axis may be denoted as a kind of ceiling of the bearing housing.

According to some embodiments, the bearing housing wall 409, which may also be denoted as the ceiling of the bearing housing, may include one or more hatches or opening. In Fig. 5, two hatches 411 and 412 are exemplarily shown in the bearing housing wall 409. The hatches in the bearing housing wall may be configured for reaching into the inside of the bearing housing. For instance, the size of the one or more hatches may be adapted for allowing access to the bearings of the bearing arrangement, and especially for allowing maintenance and/or replacement of the bearings of the bearing arrangement through the one or more hatches. Fig. 5 exemplarily shows two hatches 411 and 412; however, the number of the hatches or opening may be more than two, such as three or four, or may be dependent on the number and position of the bearings within the bearing housing, or may be less than two, such as one single hatch or opening. According to some embodiments, the size of the one or more hatches or opening may be adapted to the number. For instance, a single hatch or opening may be larger than three hatches or opening.

In some embodiments described herein, the center axial bearing, e.g. the first axial bearing 403, may be removed, by a hatch in the bearing housing wall 409 (the ceiling), e.g. through hatch 411 as shown in Fig. 5. According to some embodiments, which may be combined with other embodiments described herein, other bearings, such as radial bearings, or thrust side pads (e.g. bearings 402, 404) may be removed through a hatch in the bearing housing wall 409, and/or from a hatch in the axial, or side direction (such as one or more hatches in the bearing housing walls 408 and/or 410). According to some embodiments, which may be combined with other embodiments described herein, the at least one hatch may be located on a radial surface of the bearing housing (so that the bearing pads can e.g. be radially removed). Alternatively or additionally the at least one hatch may be located on an axial side surface of the bearing housing (so that the pads can be moved axially, for instance).

In some embodiments, a hatch of the bearing housing may be provided by a removable wall of the bearing housing, such as bearing housing wall 409, or 410 to access the bearing arrangement within the bearing housing. Typically, the removable bearing housing wall may be fixed to the rest of the bearing housing by fixation means, e.g. screws, bolts, form-fit connections, or the like.

According to some embodiments, which may be combined with other embodiments described herein, the bearing housing may be adapted to include, or may include one or more seals, especially oil seals for the bearings. Typically, the one or more hatches in the bearing housing wall enables servicing of the oil seal, e.g. by the position and/or the size of the hatch.

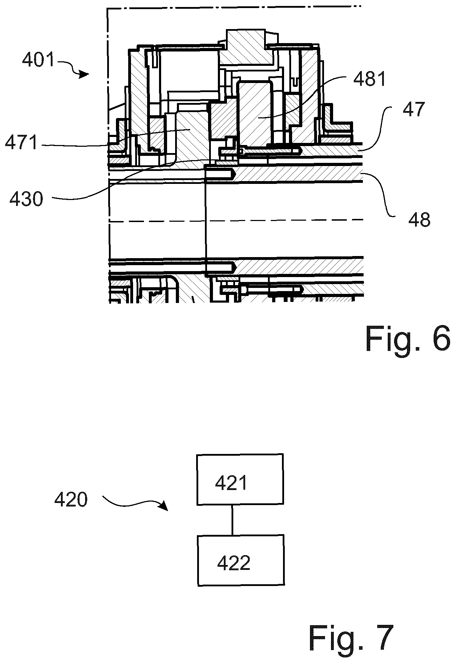

The oil seal 430 (shown e.g. in Fig. 2, and in an enlarged view in Fig. 6) may be located between shaft flanges 481 and 471. Typically, the oil seal 430 may be located under (inside) the first bearing 403. The first bearing (being e.g. designed as a pad bearing) may be removed at least partly to open up a maintenance route/space for maintenance, repair or exchange of the oil seal, especially via hatch 411 (in particular, wear parts can be changed and bonded). In some embodiments, the oil seal may include an oil seal housing. According to some embodiments, the oil seal housing part can be fastened into one of the flanges 471, 481, or both. In some embodiments (in particular additionally or alternatively), the seal housing may be attached to either (or may stand in connection to both) of the inner shaft 48 and the outer shaft 47. Typically, the oil seal may contain elastic lips seals against liner.

In some embodiments described herein, a bearing housing as referred to herein may be understood as an element housing at least one bearing and the parts to be supported by the bearing. In one example, the bearing housing may for instance house the flange 481 of the inner shaft and the shaft 471 of the outer shaft 47 at least partially and at least one (axial) bearing between the shafts. According to some embodiments, the bearing housing may be a separate housing within the hull of the pod of the azimuthing propulsion unit. In some embodiments, the bearing housing may (at least partially) be integrally formed in the hull of the pod of the azimuthing propulsion unit. For instance, one or more walls of the bearing housing may be provided by the hull of the pod of the azimuthing propulsion unit. In some embodiments, the bearing housing being at least partially integrated into the hull of the pod may provide access to the bearing arrangement within the bearing housing e.g. by removing one of the walls of the bearing housing.

Some embodiments provide a bearing unit as described herein in an azimuthing propulsion unit. In some embodiments, the azimuthing propulsion unit, which the bearing unit according to embodiments described herein is provided in, may include a motor (preferably an electric motor, and still preferably a dual electric motor), and an inner shaft and an outer shaft (which are preferably both driven by the motor). The azimuthing propulsion unit, which the bearing unit according to embodiments described herein is provided in, may further include a propeller unit including an outer shaft propeller connected (and especially driven by) the outer shaft, and an inner shaft propeller connected (and preferably driven by) the inner shaft. Typically, the drive chain of the azimuthing propulsion unit, which the bearing unit according to embodiments is provided in, includes a driven end (DE), which is the end, where the propeller unit is arranged, and a non-driven end (NDE) on the end of the drive chain opposite to the propeller unit. According to some embodiments described herein, the bearing unit as described in embodiments herein may be arranged at the NDE side of the drive chain of the azimuthing propulsion unit.

Typically, the azimuthing propulsion unit, which the bearing unit according to embodiments is provided in, or which the bearing unit according to embodiments described herein is adapted for, may be an azimuthing propulsion unit as described herein above, e.g. with respect to Figs. 1a, 1b, and/or 1c.

According to some embodiments described herein, an azimuthing propulsion unit having a bearing unit as described in embodiments herein is described. Typically, the azimuthing propulsion unit may be an azimuthing propulsion unit as described in detail above, especially with respect to Figs. 1a, 1b, and/or 1c.

As mentioned above, the bearing housing may have one or more hatches for reaching into the inside of the bearing housing. Likewise, the pod of the azimuthing propulsion unit having a bearing unit according to embodiments described herein, may provide a space for a person to reach to the one or more hatches of the bearing housing of the bearing unit. For instance, the pod of the azimuthing propulsion unit may include one or more defined paths for a person to repair, maintain, or replace the elements within the pod, e.g. the bearing unit. In some embodiments, the pod of the azimuthing propulsion unit with the bearing unit according to embodiments described herein may have a height in the inside to allow repair, maintenance, and replacement may be performed in an ergonomic way. In some embodiments, the pod may be adapted for allowing at least an arm of a maintenance person to reach to the bearing housing.

According to some embodiments described herein, a method of supporting an inner shaft and an outer shaft in an azimuthing propulsion unit is provided. Fig. 7 shows a schematic flow diagram of the method 420 as described in embodiments herein. Typically, the azimuthing propulsion unit includes the inner shaft and the outer shaft, wherein the inner shaft runs at least partially within the outer shaft. According to some embodiments, which may be combined with other embodiments described herein, the azimuthing propulsion unit, whose shafts are supported in the herein described method may for instance be an azimuthing propulsion unit as described above, especially with respect to Figs. 1a, 1b and/or 1c.

As can be seen in Fig. 7, the method 420 includes in box 421 providing a bearing arrangement 401 and a bearing housing 407 for surrounding or housing the bearing arrangement. Typically, the bearing arrangement used in the method according to embodiments described herein may be a bearing arrangement of a bearing unit as described in embodiments above. Especially, the bearing arrangement may include one or more axial bearings (402; 403; 404) for the inner shaft 48 and the outer shaft 47. In some embodiments, the bearing arrangement may include one or more radial bearings (405; 406) for the inner shaft 48 and the outer shaft 47. Typically, the axial and/or radial bearings being arranged may include one or more pad bearings as described in embodiments above. According to some embodiments, providing a bearing arrangement in a bearing housing may include providing support for the bearings in the bearing housing, such as a fixture, a receptacle, an area foreseen (and maybe preprocessed) for the bearing of the bearing unit to rest, and the like. Especially, bearing housing walls 408 and 409 may be adapted and/or prepared for providing a contact area for the axial bearings of the bearing arrangement. In some embodiments, providing the bearing arrangement and the bearing housing may include providing the bearing arrangement at least partially in the bearing housing, e.g. by using premounted elements in the bearing housing.

In box 422, the method according to embodiments described herein includes arranging the axial bearings (402; 403; 404) of the bearing arrangement 401 for allowing a transfer of axial forces between the outer shaft 47 and the inner shaft 48 of the azimuthing propulsion unit. For instance, at least one axial bearing 403 may be arranged between the inner shaft 48 and the outer shaft 48, or their flanges 471 and 481, respectively. In some embodiments, the bearing arrangement is used in the method according to embodiments described herein for allowing a combined axial load sharing. In some embodiments, the method may include bundling or merging the axial load of the two shafts.

According to some embodiments, which may be combined with other embodiments described herein, the method includes accessing the bearing arrangement 401 within the bearing housing 407 through at least one hatch 411, 412. In particular, the method according to embodiments described herein may include performing repair, maintenance, and/or replacement of the bearing arrangement 401, and/or other parts in, at or near the bearing housing (such as e.g. oil seals) through the one or more hatches.

According to some embodiments, for performing repair, maintenance, and/or replacement of the bearing, the bearing (such as an axial bearing pad) may be removed from the bearing housing. Typically, the compression between the two flanges of the inner shaft and the outer shaft around the bearing (such as the axial bearing pad) may be loosened for removing the bearing. This may be denoted as an "opening of axial gap." The loosening of the compression or the opening of an axial gap may be done via external jack-up or any force excerted by auxiliary equipment outside the bearing housing in some embodiments.

According to embodiments described herein, the bearing unit as described herein, the azimuthing propulsion unit including a bearing unit as described herein and the method for supporting shafts in an azimuthing propulsion unit as described herein allows for the montage of a bearing arrangement with a low space consumption within the pod of an azimuthing propulsion unit. Typically, the bearing unit according to embodiments described herein enables a reliable function with fewest possible parts. Additionally, the bearing unit according to embodiments described herein allows for an easy maintenance, repair, and exchange of the parts within, at or near the bearing housing, and spares time and cost for the maintenance, repair, or replacement.

This written description uses examples to describe the subject matter herein, including the best mode, and also to enable any person skilled in the art to make and use the subject matter. The patentable scope of the subject matter is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

### Reference number list

- 1000: azimuthing propulsion unit
- 1: dual rotor electric motor
- 2: Inner rotor
- 3: Outer rotor
- 4: Perforated tube
- 5: NDE outer rotor end flange
- 6: DE outer rotor end flange
- 7: DE outer shaft
- 8: DE inner shaft
- 9: Outer shaft propeller
- 10: Inner shaft propeller
- 11: DE outer bearing
- 12: DE inner bearing
- 14: Annular air channel
- 16: Cooling air unit
- 17: Air fan
- 18: Heat exchanger
- 19: Slip ring unit
- 20: power supply cables
- 21: first blades
- 22: second blades
- 23: Air gap
- 30: pod
- 31: DE Ingoing air channel
- 32: NDE Ingoing air channel
- 33: Outgoing air channel
- 34: DE Air channel separating wall
- 35: NDE Air channel separating wall
- 39: slip ring unit housing
- 40: Bearing unit
- 401: Bearing arrangement
- 402-404: Axial bearings
- 405-406: Radial bearings
- 407: Bearing housing
- 408-410: Bearing housing walls
- 411, 412: Hatches of the bearing housing
- 420: Method of supporting shafts
- 421; 422: Method steps
- 430: Seal
- 47: NDE outer shaft
- 48: NDE inner shaft
- 50: Rotation axis

## Claims

1. Bearing unit (40) for an azimuthing propulsion unit (1000), the azimuthing propulsion unit (1000) comprising a rotatable inner shaft (48) and a rotatable outer shaft (47), wherein the inner shaft (48) runs at least partially within the outer shaft (47),
the bearing unit (40) comprising:
- A bearing arrangement (401) comprising at least one axial bearing (402-404) for the inner shaft (48) and the outer shaft (47), wherein the bearing arrangement is configured for supporting at least a part of the inner shaft (48) and the outer shaft (47); and,
- A bearing housing (407) for housing the bearing arrangement (401) and the part (471; 481) of the inner shaft (48) and the outer shaft (47) to be supported by the bearing arrangement (401);
- wherein the bearing arrangement (401) is configured for allowing a transfer of axial forces between the outer shaft (47) and the inner shaft (48).

2. The bearing unit according to claim 1, wherein the bearing arrangement (401) comprises a first axial bearing (403) between the inner shaft (48) and the outer shaft (47) for allowing the transfer of axial forces between the inner shaft (48) and the outer shaft (47).

3. The bearing unit according to any of the preceding claims, wherein the bearing arrangement (401) comprises the first axial bearing (403) between the inner shaft (48) and the outer shaft (48), a second axial bearing (402) arranged between a bearing housing wall (408) and the inner shaft (48), and a third axial bearing (404) arranged between a bearing housing wall (409) and the outer shaft (47).

4. The bearing unit according to any of the preceding claims, wherein the bearing housing (407) comprises at least one hatch (411; 412) for reaching into the inside of the bearing housing (407).

5. The bearing unit according to claim 4, wherein the at least one hatch (411; 412) is configured for allowing access to one of the axial bearings (402; 403; 404), maintenance of the axial bearings (402; 403; 404) and/or replacement of the axial bearings (402; 403; 404) of the bearing arrangement (401) for the inner shaft (48) and the outer shaft (47).

6. The bearing unit according to any of the preceding claims, wherein at least one of the axial bearings (402; 403; 404) of the bearing arrangement is a pad bearing.

7. The bearing unit according to any of the preceding claims in an azimuthing propulsion unit (1000), the azimuthing propulsion unit (1000) comprising a dual electric motor (1), the inner shaft (48) and the outer shaft (47), at least one of the inner shaft (48) and the outer shaft (47) being driven by the dual electric motor (1), a propeller unit comprising an outer shaft propeller (9) and an inner shaft propeller (10), wherein the inner shaft propeller (10) is driven by the inner shaft (48) and the outer shaft propeller (9) is connected to the outer shaft (47), and wherein the drive chain of the azimuthing propulsion unit (1000) comprises a driven end (DE), which is the end, where the propeller unit is arranged, and a non-driven end (NDE) on the end of the drive chain opposite to the propeller unit.

8. The bearing unit according to claim 7, wherein the bearing unit (401) is arranged at the NDE side of the drive chain of the azimuthing propulsion unit (1000).

9. Azimuthing propulsion unit (1000) comprising a bearing unit (40) according to any of claims 1 to 6.

10. Azimuthing propulsion unit according to claim 9, wherein the bearing housing (407) has at least one hatch (411; 412) for maintenance, repair and replacement of the bearing arrangement (401) or parts of the bearing arrangement, and wherein the azimuthing propulsion unit (1000) is configured for allowing access of a person to the at least one hatch (411; 412).

11. Method (420) of supporting an inner shaft (48) and an outer shaft (47) in an azimuthing propulsion unit (1000), the azimuthing propulsion unit (1000) comprising the inner shaft (48) and the outer shaft (47), wherein the inner shaft (48) runs at least partially within the outer shaft (47), the method comprising:
∘ Providing (421) a bearing arrangement (401) and a bearing housing (407) for housing the bearing arrangement, the bearing arrangement comprising at least one axial bearing (402; 403; 404) for the inner shaft (48) and the outer shaft (47); and,
∘ Arranging (422) the axial bearing (402; 403; 404) of the bearing arrangement (401) for allowing a transfer of axial forces between the outer shaft (47) and the inner shaft (48).

12. The method according to claim 11, wherein arranging (422) the axial bearings (402; 403; 404) for a transfer of axial forces between the outer shaft (47) and the inner shaft (48) comprises arranging a first axial bearing (403) between the inner shaft (48) and the outer shaft (47).

13. The method according to claim 12, wherein arranging the first axial bearing (403) between the inner shaft (48) and the outer shaft (47) comprises utilizing a bearing pad mounted between the inner shaft (48) and the outer shaft (47).

14. The method according to any of claims 11 to 13, wherein the bearing housing (407) comprises at least one hatch (411; 412) and wherein the method further comprises:
accessing the bearing arrangement (401) within the bearing housing (407) through the at least one hatch (411; 412); and, in particular, performing repair, maintenance,
and/or replacement of the bearing arrangement (401) through the at least one hatch (411; 412).

15. The method according to any of claims 11 to 14, wherein providing the bearing unit (40) comprises mounting the bearing unit (40) in an azimuthing propulsion unit (1000), especially in an azimuthing propulsion (1000) unit according to any of claims 9 and 10.
